# EUROPÄISCHE PATENTSCHRIFT

(11) **EP 3 504 451 B1**
(45) Veröffentlichungstag und Bekanntmachung des Hinweises auf die Patenterteilung: **16.09.2020**
(21) Anmeldenummer: 17742750.7
(22) Anmeldetag: 24.07.2017
(51) Int. Cl.: F16C 3/02, F16D 1/04, F16B 19/00, B29C 53/58, F16C 33/20

(54) **GLEITBOLZEN UND STECKKUPPLUNG MIT GLEITBOLZEN**
SLIDE PIN AND KEY TYPE COUPLING WITH SLIDE PIN
BROCHE GLISSANTE ET ACCOUPLEMENT AVEC BROCHE GLISSANTE

(30) Priorität: 23.08.2016 DE 102016115619
(43) Veröffentlichungstag der Anmeldung: 03.07.2019
(73) Patentinhaber: Federal-Mogul Deva GmbH, 35260 Stadtallendorf (DE)
(72) Erfinder: MAUS, Jan-Ulrich, 35274 Kirchhain (DE)
(74) Vertreter: Becker & Kurig Partnerschaft Patentanwälte PartmbB
(86) Internationale Anmeldenummer: PCT/EP2017/068631
(87) Internationale Veröffentlichungsnummer: WO 2018/036734

(56) Entgegenhaltungen:
- DE-B4- 10 297 302
- JP-A- 2003 221 838
- US-A- 3 380 843
- US-A1- 2013 195 388

## Beschreibung

Die Erfindung betrifft Gleitbolzen im Allgemeinen. Gleitbolzen werden im Rahmen dieser Anmeldung als Stifte, Bolzen, Rohre oder Gewindeelemente angesehen, die an ihrer Außenseite mit einer Gleitschicht versehen sind. Weiterhin betrifft die vorliegende Erfindung eine Steckkupplung, in der die erfindungsgemäßen Gleitbolzen eingesetzt werden können.

### Stand der Technik

Aus der europäischen Patentanmeldung EP 1900950 A2 ist bereits ein Kunststoffgleitlager bekannt und aus der US 3 380843 A ist ein weiterer mit Fasern verbesserter Gleitbolzen bekannt.

Gleitlager sind als Hülsen ausgeführt, bei denen sich innen eine Gleitschicht oder ein besonders gleitfähiges Material befindet. Diese Lösung wird oft gewählt, da ein gleitfähiges Material meist weniger fest ist als ein Material, das gelagert werden soll. Lagerschalen ermöglichen es dabei, eine Belastung auf eine größere Fläche und einen größeren Radius zu verteilen, wodurch das gleitfähige Material geringere Kräfte aufnehmen muss. Weiterhin gestattet es die Form einer Lagerschale oder einer Lagerbuchse, besonders gut Kräfte aufzunehmen, da ein Material einer Gleitschicht bei einer Belastung nicht direkt zu einer Seite ausweichen kann, sondern in einer konkav gekrümmten Fläche abgestützt wird.

Es gibt jedoch ebenfalls Anwendungen, bei denen sich eine Lösung mit Lagern nicht anbietet oder nicht umsetzen lässt. Es kann daher wünschenswert sein, einen Gleitbolzen zur Verfügung zu haben, der an seiner Außenfläche besonders gute Gleiteigenschaften aufweist. Gleitbolzen können beispielsweise in Steckkupplungen eingesetzt werden, um eine Kraftübertragung zwischen zwei rotierenden Elementen zu ermöglichen.

Die vorliegende Erfindung stellt einen Gleitbolzen mit den Merkmalen des Anspruchs 1 bereit, wobei bevorzugte Ausführungen in den abhängigen Ansprüchen beschrieben sind. Im Gegensatz zu Lagerschalen oder Lagerbuchsen wird hier eine Außenseite eines Kerns mit einer Gleitschicht versehen, um eine Reibung des Bolzens oder Stiftes in Axialrichtung oder in einer Umfangsrichtung zu verringern. Die Stifte können vollständig oder nur auf einer radial außenliegenden Fläche mit der Gleitschicht versehen sein. Es kann ebenfalls vorgesehen sein, nur einen Teil einer axialen Ausdehnung des Gleitbolzens mit der Gleitschicht zu versehen. Solche Gleitbolzen können mit einem Ende in einem Maschinenelement verankert werden und mit einem freien Ende eine Gleiteigenschaft bereitstellen.

Die Gleitschicht ist erfindungsgemäß als eine Verbundgleitschicht ausgeführt und in einem Harz eingebettet. Dies gestattet es, einen beliebigen Kern mit einer Gleitschicht aus einem Verbundmaterial zu versehen.

Bevorzugt sind in der Gleitschicht Polyesterfasern oder Polyesterfasern mit PTFE vorgesehen, die in dem Harz eingebettet sind.

Bei einer beispielhaften Ausführung der vorliegenden Erfindung ist ein Festschmierstoff in der Gleitschicht in dem Harz eingebettet vorgesehen, und zwar bevorzugt ein faserförmiger Festschmierstoff. Man kann aber andere Festschmierstoffe einmischen, zB Graphit. Faserförmige Festschmierstoffe lassen sich besonders einfach auf einen im Wesentlichen zylindrischen Kern aufwickeln. Fasern des faserförmigen Festschmierstoffs können dabei vor oder bei einem Aufbringen mit einem Harz getränkt werden, um eine Verbundmaterial-Gleitschicht zu bilden. Bei Verwendung eines Faserverbundmaterials, das auf einem Harz basiert, kann ausgenutzt werden, dass sich die verwendeten Fasern (z.B. Polyesterfäden) beim Aushärten zusammenziehen und das Harz beim Aushärten schrumpft und so einer Verbindung zwischen dem Kern und der Gleitschicht eine höhere Stabilität verleiht bzw. sich die Gleitschicht um bzw. auf den Kern presst. Es ist vorgesehen, den Kern vor einem Bewickeln mit einem Fasermaterial eines Faserverbundmaterials aufzurauen, um eine Haftung zwischen dem Kern und der Gleitschicht bzw. dem Faserverbundmaterial zu erhöhen.

Bei einer zusätzlichen Ausführung des Gleitbolzens umfasst die Gleitschicht ein deva.tex Material. Deva.tex ist ein selbstschmierender Hochleistungs-Gleitlagerwerkstoff, der bearbeitet werden kann. Deva.tex umfasst einen Faserwerkstoff, der durch Epoxidharz verstärkt wird und mit dem Zusatz von PTFE seine herausragende Leistungsfähigkeit erhält. Deva.tex-Gleitlager zeichnen sich durch hohe Korrosions- und Verschleißbeständigkeit aus und sind unempfindlich gegenüber Verunreinigung sowie Vibrationen, Schlag- und Stoßbeanbeanspruchungen. Es gibt deva.tex in verschiedenen Ausführungen, wobei jedoch immer ein Faserverbundwerkstoff mit einem Festschmierstoff wie PTFE oder Graphit kombiniert ist. Insbesondere bei PTFE ist es möglich, dieses alleine oder in Kombination mit Graphit oder Polyesterfasern in einer Harzmatrix einzubetten, die die Gleitschicht bildet. Es kann ebenfalls vorgesehen sein, Fasern nur zum Erreichen einer Stabilität in der Gleitschicht einzusetzen und zusätzliche Festschmierstoffe nur zur Schmierung in eine Harzmatrix einzubetten. Das Material bzw. die Materialaufbauten deva.tex™, sind als deva.tex532™, deva.tex541™ deva.tex542™ oder deva.tex552™ verfügbar und können auch in dieser Form eingesetzt werden.

Bei einer weiteren beispielhaften Ausführungsform des Gleitbolzens werden Fasern des Festschmierstoffs und/oder Fasern eines Faserverbundmaterials auf den Kern aufgewickelt. Es kann ebenfalls vorgesehen sein, die Fasern in einem Flechtverfahren auf den Kern aufzubringen bzw. aufzuwickeln. Ein Faserverbundmaterial mit verflochtenen Fasern lässt eine höhere Gesamtstabilität bei einer erhöhten Gesamtelastizität erwarten. Weiterhin können sich geschlossen um einen Bolzen erstreckende Fasern eine besonders hohe Festigkeit erreichen, da es im Prinzip möglich ist, die Gleitschicht aus nur einem einzigen Faserstrang zu wickeln.

Bei einer anderen beispielhaften Ausführungsform des Gleitbolzens weist der Kern eine Rauheit bzw. eine Rauhtiefe von 0,01 bis 0,5mm, weiter bevorzugt von 0,02 bis 0,2mm, und weiter bevorzugt von 0,05 bis 0,1mm, auf. Diese Rauheit ermöglicht eine bessere Verbindung zwischen einem Harz einer Gleitschicht oder einer anderen Verbundschicht und dem Kern. Bei einer hohen Rauheit ist es sogar möglich, einen hohen Kraftschluss zwischen der Oberfläche des Kerns und den Fasersträngen der Fasern des Faserverbundwerkstoffs zu erreichen, wodurch eine Ablösung der Gleitschicht von dem Kern auch bei höheren Torsionsbelastungen verhindert werden kann.

Eine weitere beispielhafte Ausführungsform des Gleitbolzens umfasst einen Kern aus einem Aluminium-, Stahl-, Eisen-, Glasfaserverbund-, Kohlefaserverbund- bzw. Aramidfaserverbund-Werkstoff oder einer Kombination dieser Werkstoffe. Insbesondere Faserverbundwerkstoffe gestatten eine hervorragende Stabilität bei gleichzeitig geringem Gewicht. Es ist ebenfalls möglich, Stäbe und Rohre aus Faserverbundmaterial je nach zu erwartendem Belastungsfall zu optimieren, indem in Umfangsrichtung gewickelte, parallel in Axialrichtung verlaufende oder in einem 45° Winkel zur Axialrichtung gewickelte Fasern in dem Kern verwendet werden.

Eine zusätzliche beispielhafte Ausführungsform des Gleitbolzens umfasst einen Kern, der als Vollmaterial, als Rohr, als Profil oder als Profilrohr ausgeführt ist. Es kann aus Gewichts- und Kostengründen vorteilhaft sein, einen Kern zu verwenden, der mit Hohlräumen versehen ist. Ein rohrförmiger Kern kann gegenüber einem Kern aus einem Vollmaterial eine bedeutende Menge Material einsparen. Weiterhin kann ein rohrförmiger Kern nahezu die gleichen Druckbelastungen aufnehmen wie ein Kern aus einem Vollmaterial, da bei zylinderförmigen Kernen eine Kontaktfläche außen an dem Kern lediglich einen sehr kleinen Teil der Oberfläche eines Kerns betrifft. Es ist ebenfalls möglich, Kerne zu verwenden die mit Kammern versehen sind oder die zumindest teilweise ein geschäumtes Verbundmaterial, beispielsweise für einen Innenbereich des Kerns, umfassen.

Bei einer zusätzlichen beispielhaften Ausführungsform des Gleitbolzens ist zwischen dem Kern und der Gleitschicht eine Zwischenschicht angeordnet. Die Zwischenschicht kann vorgesehen sein, um die Haftung der Gleitschicht auf dem Kern zu verbessern. Es kann ebenfalls vorgesehen sein, die Zwischenschicht dazu zu nutzen, die mechanischen Eigenschaften des Kerns besser an die der Gleitschicht anzupassen. So können durch zwei Grenzschichten zwischen ähnlicheren Materialien Spannungsspitzen vermieden werden, die an einer einzelnen Grenzschicht auftreten würden. Weiterhin kann das Material der Zwischenschicht so gewählt werden, dass eine Gesamtstabilität der beiden Materialschnittstellen über der einer einzelnen Materialschnittstelle zwischen dem Kernmaterial und einem Gleitschichtmaterial liegt.

Bei einer zusätzlichen Ausführung des Gleitbolzens umfasst die Zwischenschicht ein Elastomer- und/oder ein Verbund- bzw. Faserverbundmaterial. Diese Ausführung umfasst ebenfalls ein faserverstärktes bzw. Faser-Elastomer-Verbundmaterial. Die Zwischenschicht kann ebenfalls auch die gleichen Fasern oder das gleiche Harz umfassen wie ein Material des Kerns. Die Zwischenschicht kann ebenfalls auch die gleichen Fasern oder das gleiche Harz umfassen wie ein Material der Gleitschicht.

Bei weiteren Ausführungsformen des Gleitbolzens umfasst die Zwischenschicht ein Faserverbundmaterial und die Gleitschicht umfasst einen faserförmigen Festschmierstoff, der in ein Harz eingebettet ist. In weiteren beispielhaften Ausführungen erstrecken sich Fasern der Zwischenschicht bis in das Harz der Gleitschicht und/oder es erstrecken sich Fasern des faserförmigen Festschmierstoffs der Gleitschicht bis in die Zwischenschicht. Dies kann relativ einfach dadurch erreicht werden, dass beispielsweise ein Fasermaterial des Kerns oder der Zwischenschicht beim Ende des Aufbringens nicht mehr mit einem Harz überzogen wird und somit ganz oder teilweise als reines Fasermaterial vorliegt. Diese freien Faserenden können dann mit einem Harz der Zwischensicht oder der Gleitschicht überzogen werden, wodurch ein fließender Übergang zwischen dem Kern der Zwischenschicht und der Gleitschicht erreicht werden kann. Umgekehrt ist es ebenfalls möglich, die Fasern der Zwischenschicht oder der Gleitschicht jeweils zu Beginn eines Aufbringens jeweils mit einem Harz des Kerns bzw. der Zwischenschicht zu imprägnieren und so ebenfalls einen allmählichen Übergang zwischen diesen Elementen zu erzeugen.

Bei einer anderen Ausführungsform des Gleitbolzens wird die Zwischenschicht an einer Außenseite angeraut oder strukturiert, um eine Anbindung der Gleitschicht an der Zwischenschicht zu verbessern. Dies kann entweder durch einen gesonderten, beispielsweise spanenden Vorgang erreicht werden oder es ist beispielsweise möglich, die Zwischenschicht durch einen Umformvorgang aufzurauen. Eine aufgeraute Oberfläche stellt eine größere Kontaktflache zu der Gleitschicht bereit, was eine Stabilität des Schichtaufbaus verbessert.

Bei einer weiteren Ausführungsform des Gleitbolzens ist die Zwischenschicht aus einem Kraibon - Material hergestellt. Bevorzugte Ausführungen des Gleitbolzens umfassen einen Kern aus Eisen oder Stahl, auf dem ein Kraibon-Material aufgebracht ist, auf dem wiederum eine deva.tex Gleitschicht, wie deva.tex 552, aufgebracht ist.

Es ist ebenfalls möglich einen Bolzen beispielsweise aus einem Eisen- oder Stahlwerkstoff direkt mit einer Kraibon-Lage zu versehen. Dieser Verbund kann dann auf dem Material bzw. den Fasern deva.tex552 durch "Nass"-Laminieren, beispielsweise durch Kreuzwickeln auf diesen Kern, mit der Kraibon-Lage aufgebracht werden. Der so hergestellte Gleitbolzen kann dann durch Tempern bei ca. 90°C und ca. 140°C ausgehärtet werden. Der Gleitbolzen kann dann maschinell bearbeitet werden, um geforderte Toleranzen zu erfüllen.

Bei einer weiteren Ausführung des Gleitbolzens ist der Kern an einer Außenseite angerauht oder strukturiert, um eine Anbindung der Zwischenschicht oder der Gleitschicht an dem Kern oder eine Anbindung der Gleitschicht an der Zwischenschicht zu verbessern. Es ist möglich, hier beispielsweise eine Art Gewindestruktur oder Kreuzgewindestruktur aufzubringen, bei der ein Links- und ein Rechtsgewinde in die Außenseite des Kerns geschnitten werden, die es gestatten, insbesondere kreuzgewickelte Fasern eines Faserverbundmaterial besonders gut anzubinden. Es ist ebenfalls möglich, andere Strukturen in dem Kern einzubringen oder den Kern bereits mit diesen Strukturen herzustellen. Es ist ebenfalls möglich, Stacheln oder Erhebungen an einer Umfangsfläche der Kerne anzubringen, um Hafteigenschaften zu verbessern.

Bei einer weiteren beispielhaften Ausführungsform des Gleitbolzens beträgt eine radiale Dicke der Gleitschicht zwischen 0,5mm und 2mm und/oder eine radiale Wandstärke einer Zwischenschicht 12 beträgt zwischen 0,1mm und 1mm.

Bei einer zusätzlichen Ausführungsform des vorliegenden Gleitbolzens ist der Kern aus einem elektrisch leitfähigen Material hergestellt.

Bei einer weiteren anderen beispielhaften Ausführung ist in der Gleitschicht mindestens ein Einlegelement aus einem elektrisch leitfähigen Material eingebracht, sodass eine elektrisch leitfähige Verbindung zwischen verschiedenen Punkten der äußeren Oberfläche des Gleitbolzens besteht. Diese Ausführung gestattet es, Steckkupplungen mit den erfindungsgemäßen Gleitbolzen herzustellen, die eine elektrische Verbindung zwischen zwei Kupplungselementen ermöglicht, die durch die Gleitbolzen verbunden sind.

Bei einer weiteren beispielhaften Ausführungsform der vorliegenden Erfindung wird ein Kern aus einem elektrisch leitfähigen Material und eine Gleitschicht und eine optional vorhandenen Zwischenschicht mit jeweils mindestens einem Einlegelement aus einem elektrisch leitfähigen Material verwendet, sodass eine elektrisch leitfähige Verbindung zwischen mindestens einem Bereich einer Gleitschicht und dem Kern des Lagerbolzens gebildet wird. Diese Ausführung eines Lagerbolzens lässt sich aus elektrischer Sicht nicht von einem Eisen- oder Stahlbolzen unterscheiden, kann jedoch eine weit geringere Reibung bereitstellen.

In einer anderen beispielhaften Ausführung der vorliegenden Erfindung ist das Einlegelement aus Graphit gebildet oder es umfasst einen Draht aus leitfähigem Material. Leitfähige Materialien können dabei Molybdändisulfit-Kupfer oder andere ähnlich weiche leitfähige Materialien darstellen, die weich genug sind, um ein Material der Gleitschicht bei einer spanenden Bearbeitung oder im Betrieb nicht zu beschädigen.

Gemäß einem weiteren Aspekt der vorliegenden Erfindung wird eine Steckkupplung mit einem ersten Kupplungsteil und einem zweiten Kupplungsteil bereitgestellt. Das erste Kupplungsteil und das zweite Kupplungsteil umfassen jeweils Ausnehmungen für Gleitbolzen. Wenn die Gleitbolzen in die jeweiligen Ausnehmungen des ersten Kupplungsteils und des zweien Kupplungsteils eingesetzt sind, wird eine formschlüssige Verbindung zwischen dem ersten Kupplungsteil und dem zweiten Kupplungsteil erreicht. Durch die Gleitschicht an den Gleitbolzen kann die Reibung, die bei einem Betrieb der Steckkupplung entsteht, verringert werden.

Bei einer weiteren beispielhaften Ausführungsform der vorliegenden Erfindung ist die Gleitschicht aus Faserverbundmaterial gefertigt. Dabei bezieht sich die vorliegende Erfindung insbesondere auf Gleitlager, wie sie in der vorstehend genannten europäischen Patentanmeldung EP 1900950 A2 offenbart sind. Dabei sind festschmierstoffgefüllte, faserverstärkte Epoxidharzgleitschichten bevorzugt. In bevorzugten Ausführungen werden die festschmierstoffgefüllten, faserverstärkten Epoxidharzgleitschichten durch eine glasfaserverstärkte Tragschicht gestützt.

Bei einer weiteren beispielhaften Ausführungsform der vorliegenden Erfindung ist der Draht aus leitfähigem Material sowohl in dem elektrisch isolierenden Material als auch in die Gleitschicht aus Faserverbundmaterial eingewickelt. Dabei kann ein einzelner durchgehender Draht verwendet werden, der in beiden Elementen, d.h. der Trägerschicht sowie der Gleitschicht, eingelegt ist, um insgesamt eine einzelne durchgehende Verbindung zwischen der Gleitfläche und der Trägerfläche zu erzeugen. Im Vergleich zu einer Lösung mit Pfosten mit relativ großem Durchmesser und großer Dicke sollte hier ein Material mit einer höheren Leitfähigkeit als Graphit verwendet werden, wie Kupfer oder Silber, um auch bei geringeren Querschnitten und einer größeren Länge des Leiters noch eine ausreichende Leitfähigkeit zur Verfügung stellen zu können. Zusätzlich zu bzw. anstelle von Graphit kann ebenfalls Molybdändisulfit in den pfostenförmigen Einlegelementen eingesetzt werden. In dem Graphit und/oder Molybdändisulfid können auch feinst verteilte Weichmetalle, z. B. Aluminium, Kupfer, Blei, Silber, Keramikpartikel oder Kunststoffe. wie z. B. PTFE (Teflon), in den pfostenförmigen Einlegelementen eingesetzt werden.

Die Erfindung wird im Folgenden anhand von beispielhaften Ausführungen verdeutlicht, die schematisch einen Gleitbolzen mit außenliegender Gleitfläche darstellen.
Figur 1 stellt eine perspektivische Ansicht eines Gleitbolzens mit einem Kern und einer Gleitschicht dar.
Figur 2 zeigt eine perspektivische Ansicht eines Gleitbolzens mit einem Kern, einer Zwischenschicht und einer Gleitschicht.
Figur 3 zeigt eine axiale Ansicht auf einen Gleitbolzen in Faserverbundbauweise.
Figur 4 stellt eine perspektivische Ansicht eines leitfähigen Gleitbolzens mit einem Kern und einer Gleitschicht, die jeweils aus Faserverbundwerkstoffen hergestellt sind, dar.
Figur 5 stellt eine perspektivische Ansicht einer Torsions-Steckkupplung dar, bei der erfindungsgemäße Gleitbolzens eingesetzt wird.

Sowohl in den Figuren als auch in der Beschreibung werden gleiche Bezugszeichen verwendet, um auf gleiche oder ähnliche Elemente Bezug zu nehmen.

### Detaillierte Beschreibung von Ausführungsformen

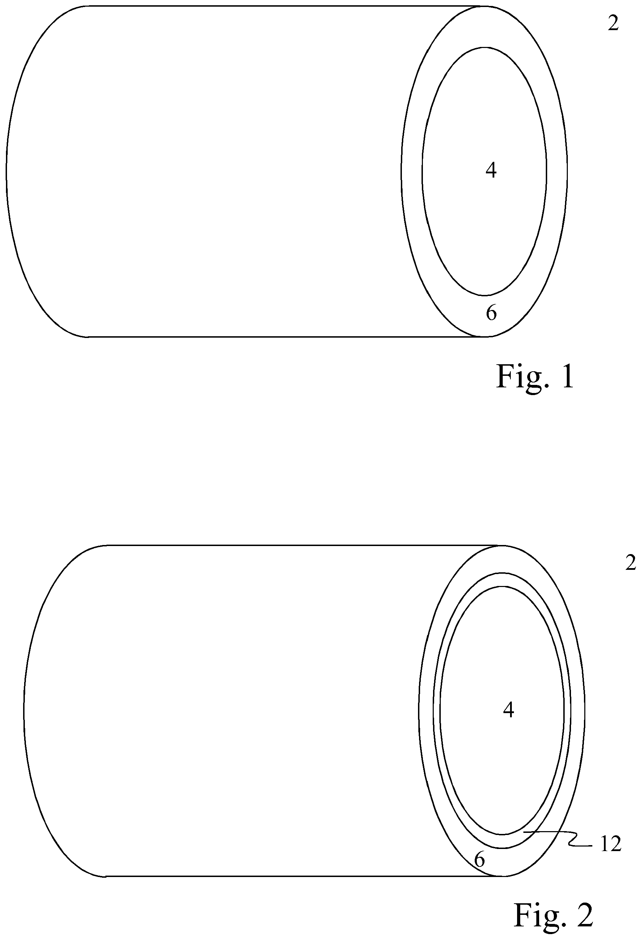

Fig. 1 zeigt eine perspektivische Ansicht eines einfachen Gleitbolzen 2 gemäß einer Ausführungsform der Erfindung. Der Gleitbolzen umfasst einen im Wesentlichen kreiszylindrischen Kern 4 aus einem festen Material, auf dem eine Gleitschicht 6 aufgebracht ist. Im Gegensatz zu der herkömmlichen Lösung von Lagerschalen besteht hier ein besonderes Verhältnis zwischen einer Gleitfläche der Gleitschicht 6 und einer Kontaktfläche zwischen der Gleitschicht 6 und dem Kern 4.

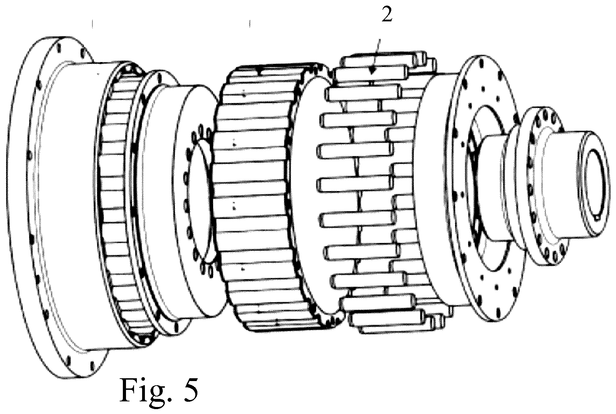

Gleitbolzen werden hier entworfen, um bei Anwendungen eingesetzt zu werden, bei denen Lagerschalen oder Lagerbuchsen nicht verwendet werden können, wie im Fall von Torsions-Steckkupplungen, wie beispielsweise in Figur 5 dargestellt.

Bei den Gleitbolzen 2 dient die äußere Oberfläche als Gleitfläche. Das Material der Gleitschicht ist aus einem elektrisch isolierenden Material gefertigt. Hier und im Weiteren werden lediglich Beispiele eines zylindrischen bzw. rohrförmigen Gleitbolzens verwendet, es sollte jedoch klar sein, dass sich die genannten Bauformen auch auf andere Lagerformen wie Kegelbolzen usw. anwenden lassen.

Figur 2 zeigt eine perspektivische Ansicht eines Gleitbolzens 2 mit einem Kern 4, einer Zwischenschicht 12 und einer Gleitschicht 6. Der Gleitbolzen 2 ist zusätzlich zwischen der Gleitschicht 6 und dem Kern 4 mit einer Zwischenschicht 12 versehen, um die Gesamthaftung der Gleitschicht 6 auf dem Kern 4 zu verbessern. Der Kern 4 weist andere physikalische Eigenschaften auf als die Gleitschicht 6. Insbesondere weist der Kern 4 eine andere Härte, ein andere Elastizitäsmodul, einen anderen Wärmeausdehnungskoeffizienten, eine andere Wärmekapazität, eine andere Körperschallgeschwindigkeit und dergleichen wie die Gleitschicht 6 auf. Durch diese Unterschiede kann es an der Grenzschicht zwischen Kern 4 und der Gleitschicht 6 zu einer Ablösung der Gleitschicht 6 vom Kern 4 kommen. Um dieses Problem abzumildern, wird in dem Gleitbolzen 2 der Figur 2 eine Zwischenschicht 12 verwendet, die den Übergang zwischen den physikalischen Eigenschaften der Gleitschicht 6 und dem Kerns 4 in zwei kleinere Übergänge an zwei Grenzflächen mit der Zwischenschicht 14 aufteilt, wobei jede der Grenzflächen stabiler ist als der direkte Übergang zwischen dem Kern 4 und der Gleitschicht 6.

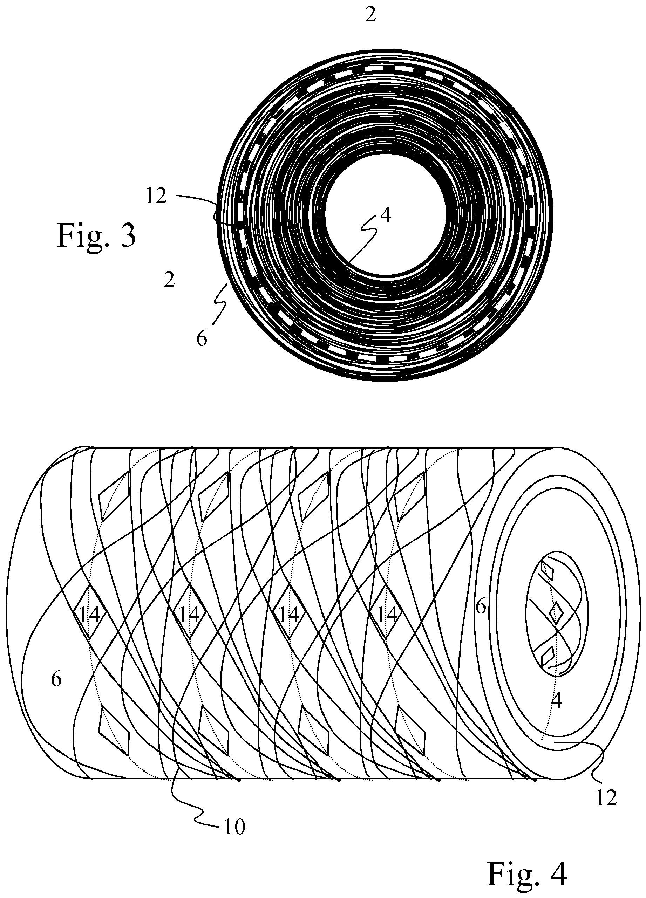

Figur 3 zeigt eine axiale Ansicht auf einen Gleitbolzen in Faserverbundbauweise. In Figur 3 sind sowohl der Kern 4 als auch die Zwischenschicht 12 und die Gleitschicht 6 jeweils aus einem Faserverbundmaterial hergestellt. Sowohl der Kern 4 als auch die Zwischenschicht 12 und die Gleitschicht 6 sind jeweils durch Wickeln aus einem Faserverbundmaterial hergestellt. Bei rohrförmigen Gleitbolzen kann eine Innenform verwendet werden, auf der der Verbundwerkstoff des Kerns 4 aufgewickelt wird, es ist jedoch ebenfalls möglich, ein Vollmaterial als verlorene Kernform zu verwenden, die später in dem Kern verbleibt.

Im Gegensatz zu der herkömmlichen Lösung von Lagerschalen besteht hier ein weniger günstiges Verhältnis zwischen einer Gleitfläche der Gleitschicht 6 und einer Kontaktfläche zwischen der Gleitschicht 6 und dem Kern 4. Das rührt daher, dass bei einem Gleitbolzen eine Kontaktfläche mit dem Kern immer kleiner ist als eine Gleitfläche der Gleitschicht. Dies ist dadurch bedingt, dass die Kontaktfläche immer einen kleineren Durchmesser aufweist als die Gleitfläche. Bei einer Lagerschale hingegen wird ein Material einer Gleitschicht immer mit einer Kontaktfläche in einer Lagerschale oder Lagerhülse verankert sein, die größer ist als die Gleitfläche einer entsprechenden Gleitschicht, was durch den größeren Durchmesser bedingt ist. Weiterhin wird das Gleitmaterial bei einer Lagerschale in einer konkaven Fläche abgestützt, was sich ebenfalls positiv auf die Stabilität bei Belastung auswirkt. Bei Gleitbolzen hingegen ist die Kontaktfläche der Gleitschicht mit dem Kern konvex gekrümmt, sodass sich die Gleitschicht leichter von den Kern lösen lässt, da an der Kontaktstelle größere Scherkräfte auftreten. Dieser konstruktionsbedingte Nachteil kann hier aber dadurch ausgeglichen werden, dass die Gleitschicht als ein Faserverbundmaterial ausgeführt werden kann, bei dem sich die Fasern komplett um den Kern 4 erstrecken, wodurch eine sehr gute Haftung der Gleitschicht 6 auf dem Kern erreicht werden kann. Bei einer Belastung der Gleitschicht 6 können die Kräfte durch die gewickelten Fasern um den Kern herum geleitet werden. Es ist ebenfalls möglich, durch eine raue oder strukturierte Kontaktfläche zwischen dem Kern 4 und der Gleitschicht 6 eine erhöhte Haftung zwischen diesen Elementen zu erzielen.

In Figur 3 ist die Zwischenschicht 12 als gestrichelte Linie dargestellt, da sonst eine deutliche Abgrenzung zwischen dem Kern 4, der Zwischenschicht 12 und der Gleitschicht nicht möglich wäre. Die gestrichelte Linie soll ebenfalls eine strukturierte Zwischenschicht 12 darstellen, die durch Formschluss eine bessere Haftung zwischen dem Kern 4 und der Gleitschicht 6 ermöglicht. Es sei ebenfalls darauf hingewiesen, dass das Harz der Gleitschicht nass bzw. feucht auf den Kern aufgetragen wird.

Figur 4 stellt eine perspektivische Ansicht eines leitfähigen Gleitbolzens 2 mit einem Kern 4 und einer Gleitschicht 6 sowie einer Zwischenschicht 12 dar, die jeweils aus Faserverbundwerkstoffen hergestellt sind. Der Gleitbolzen erhält seine Leitfähigkeit durch radial verlaufende leitfähige Einlagen 14, die Strom leiten können. Bevorzugt wird der Hohlraum des Kerns 4 ebenfalls mit einem leitfähigen Material gefüllt, sodass alle Einlegeelemente untereinander elektrisch verbunden sind. Es ist ebenfalls möglich, die Einlegeelemente versetzt anzuordnen, um sicherzustellen, dass unter jedem Winkel ein elektrischer Kontakt zwischen Elementen besteht, die mit dem Gleitbolzen in Verbindung stehen.

Figur 5 stellt eine perspektivische Ansicht einer Torsions-Steckkupplung dar, bei der der erfindungsgemäße Gleitbolzen eingesetzt werden. Die Gleitschicht der Gleitbolzen verringert an jeder Eingriffsstelle die Reibung zwischen den beiden Elementen der Torsions-Steckkupplung, wodurch die Gesamtreibung der Torsions-Steckkupplung insgesamt verringert werden kann. Durch die verringerte Reibung entsteht bei einem Betrieb der Torsions-Steckkupplung weniger Wärme, wodurch die Einsatzdauer der Kupplung verlängert werden können.

Das Material des Kerns 4 bzw. der Gleitschicht 6 kann zunächst ein beliebiges isolierendes Material sein, beispielsweise ein keramischer Werkstoff oder ein Kunststoffmaterial. Bevorzugte Kunststoffmaterialien sind Polymere und insbesondere Faserverbundwerkstoffe, bei denen verstärkende Fasern in ein Polymermaterial eingebettet sind. Als Fasermaterial kommen beispielsweise Polyesterfasern in Frage.

Als mögliches Material für die elektrisch leitfähigen Einlegelemente 14 der Figur 4 bietet sich Graphit an. Damit wird sowohl eine leitende Verbindung zwischen der Außenseite der Gleitschicht und dem Kern erreicht als auch gleichzeitig ein schmierendes Material in die Gleitschicht des Gleitbolzens eingebracht, das die Gleiteigenschaften des Gleitbolzens 2 verbessern kann. Ebenso sind aber auch andere leitfähige Festschmierstoffe denkbar. Alternativ kann ein leitfähiges Material mit geringeren Schmiereigenschaften gewählt werden. Es ist auch denkbar, mehrere Materialien miteinander zu kombinieren, so dass beispielsweise ein Teil der Einlegelemente 14 aus Graphit gebildet ist und ein weiterer Teil aus anderen Materialien.

Auch die Lage der Einlegelemente 14 ist in der Figur 4 nicht festgelegt. Während im gezeigten Beispiel eine regelmäßige Anordnung auf einem einzigen Umfangskreis gezeigt ist, könnten auch Ausnehmungen und entsprechende Einlegelemente auf mehreren Umfangskreisen, gleichmäßig über die Umfangsfläche verteilt oder unregelmäßig verteilt, eingebracht sein.

Vorzugsweise weist der Kern 4 eine hohe Festigkeit und Beständigkeit auf, während außen die Gleitschicht 6 mit entsprechenden tribologischen Eigenschaften aufgebracht ist. Wieder können eine oder beide Schichten aus einem Faserverbundwerkstoff oder generell einem Polymer aufgebaut sein. Neben Fasern können insbesondere in der Gleitschicht 6 Festschmierstoffe enthalten sein, um eine selbstschmierende Gleitschicht zu erreichen. Die relativen Größenverhältnisse der Zeichnung sollen nur beispielhaft sein. Die Gleitschicht 6 kann wesentlich dünner als der Kern 4 ausgebildet sein. Die Zwischenschicht 12 kann wesentlich dünner als die Gleitschicht 6 ausgebildet sein.

Bei Torsions-Steckkupplungen kann es ausreichen, wenn lediglich in der Gleitschicht 6 in Umfangsrichtung verlaufende leitfähige Einlegeelemente eingebracht sind. Derartige drahtförmigen Einlegeelemente können beim Laminieren der Gleitschicht mit einlaminiert werden und so für einen umlaufenden elektrischen Kontakt an einer Mantelfläche der Gleitschicht sorgen.

In Figur 4 werden rautenförmige Einlegelemente 14 verwendet. Diese rautenförmigen Einlegelemente werden von den Fasern eines Faserverbundwerkstoffs umschlossen. Bei einer Kreuzwicklung bzw. gekreuzten Wicklung können sich zwischen den Fasern rautenförmigen Bereiche ergeben, in denen rautenförmigen Einlegelemente 14 untergebracht werden können. Es ist ebenfalls vorgesehen, weitere Fasern in Umfangsrichtung einzulegen, die hier aber nicht dargestellt sind, um ein Übereinanderliegen der Fasern in den Kreuzungsbereichen auszugleichen. Die optional parallel in Umfangsrichtung verlaufenden Fasern wurden nicht dargestellt, um die Figur nicht unübersichtlicher zu machen. Ansonsten entspricht die Ausführung von Figur 4 dem Gleitbolzen, der in der Figur 3 dargestellt ist.

Während auch hier Graphit als Material für die Einlegelemente in Frage kommt, sind diesmal die Schmiereigenschaften weniger relevant, so dass auch andere leitfähige Materialien bevorzugt sein können. Es ist ebenfalls vorgesehen, anders geformte Einlegelemente, wie streifenförmige Einlegelemente, zu verwenden. Es ist ebenfalls beabsichtigt, andere Orte für die Einlagen zu wählen oder diese nur auf eine Hälfte bzw. einen bestimmten, sehr eingeschränkten Bereich zu begrenzen.

Die Gleitschichten der Gleitbolzen 2 umfassen bevorzugt als Material das deva.tex und die Zwischenschicht 12 wird bevorzugt aus Kraibon gefertigt. Es sind jedoch ebenfalls andere Kombinationen von Festschmierstoffen in einer Harzmatrix für die Gleitschicht 6 und Faserwerkstoffen in einer Elastomermatrix für die Zwischenschicht 12 vorgesehen.

### Bezugszeichenliste

- 2: Gleitbolzen
- 4: Kern
- 6: Gleitschicht
- 8: Hartz
- 10: Festschmierstoff
- 12: Zwischenschicht
- 14: Einlegelement

## Patentansprüche

1. Gleitbolzen (2), umfassend
einen Kern (4), wobei außen auf den Kern eine Gleitschicht (6) aufgebracht ist, die als eine Verbundgleitschicht ausgeführt ist, wobei die Gleitschicht (6) Polyesterfasern oder Polyesterfasern mit PTFE aufweist, die in ein Harz (8) eingebettet sind, wobei die Polyesterfasern oder die Polyesterfasern mit PTFE auf den Kern aufgewickelt sind, und wobei der Kern an einer Außenseite angeraut oder strukturiert ist.

2. Gleitbolzen (2) nach Anspruch 1, wobei auf dem Kern eine Gewindestruktur oder Kreuzgewindestruktur aufgebracht ist.

3. Gleitbolzen (2) nach Anspruch 1 oder 2, wobei der Gleitbolzen vollständig mit der Gleitschicht versehen ist.

4. Gleitbolzen (2) nach Anspruch 1, 2 oder 3, wobei ein Festschmierstoff (10) in die verwendeten Polyesterfasern eingebettet ist.

5. Gleitbolzen (2) nach Anspruch 4 wobei der Festschmierstoff (10) ein faserförmiger Festschmierstoff ist.

6. Gleitbolzen (2) nach einem der vorstehenden Ansprüche, wobei getränkte Polyesterfasern auf den Kern (4) aufgewickelt sind.

7. Gleitbolzen (2) nach einem der vorstehenden Ansprüche, wobei der Kern (4). eine Rauhtiefe von 0,01 bis 0,5mm, weiter bevorzugt von 0,02 bis 0,2mm, und weiter bevorzugt von 0,05 bis 0,1mm, aufweist.

8. Gleitbolzen (2) nach einem der vorstehenden Ansprüche, wobei der Kern (4) einen Aluminium-, einen Stahl-, einen Eisen-, einen Glasfasserverbund- einen Kohlefaserverbund- oder einen Aramidfaserverbund-Werkstoff oder eine Kombination dieser Werkstoffe umfasst.

9. Gleitbolzen (2) nach einem der vorstehenden Ansprüche, wobei der Kern (4) als Vollmaterial aufgebracht ist.

10. Gleitbolzen (2) nach einem der vorstehenden Ansprüche, wobei zwischen dem Kern (4) und der Gleitschicht (6) eine Zwischenschicht (12) angeordnet ist.

11. Gleitbolzen (2) nach Anspruch 10, wobei die Zwischenschicht (12) ein Elastomer- und/oder ein Verbund- und oder Faserverbundmaterial umfasst.

12. Gleitbolzen (2) nach Anspruch 11, wobei die Zwischenschicht (12) ein Faserverbundmaterial aufweist, und die Gleitschicht (6) Polyesterfasern oder Polyesterfasern mit PTFE aufweist, die jeweils in ein Harz (8) eingebettet sind, wobei
- sich Fasern der Zwischenschicht (12) bis in die Gleitschicht (6) erstrecken,
- sich Polyesterfasern oder Polyesterfasern mit PTFE bis in die Zwischenschicht (12) erstrecken,

13. Gleitbolzen (2) nach einem der vorstehenden Ansprüche 11 bis 12, wobei die Zwischenschicht an seiner Außenseite angeraut oder strukturiert ist, um eine Anbindung der Gleitschicht (6) an der Zwischenschicht zu verbessern.

14. Gleitbolzen (2) nach einem der vorstehenden Ansprüche 11 bis 13, wobei der Kern (4) an seiner Außenseite angeraut oder strukturiert ist, um eine Anbindung der Zwischenschicht (12) an dem Kern zu verbessern.

15. Gleitbolzen (2) nach einem der vorstehenden Ansprüche 12 bis 15,
wobei in der Gleitschicht (6) und/oder in der Gleitschicht (6) und der Zwischenschicht mindestens ein Einlegelement (14) aus einem elektrisch leitfähigen Material eingebracht ist, und
wobei bevorzugt der Kern (4) aus einem elektrisch leitfähigen Material hergestellt ist, so dass eine elektrisch leitfähige Verbindung zwischen mindestens einem Bereich einer Gleitschicht (6) und dem Kern (2) des Gleitbolzens gebildet wird.

16. Gleitbolzen (2) nach einem der vorhergehenden Ansprüche 11 bis 15, wobei das Einlegelement (14) aus Graphit gebildet ist oder einen Draht aus leitfähigem Material umfasst.

17. Gleitbolzen (2) nach Anspruch 15 oder 16, wobei der Kern (4) in ein Fasermaterial der Zwischenschicht eingewickelt ist, der Kern oder die Zwischenschicht in ein Fasermaterial der Gleitschicht eingewickelt ist und/oder das Einlegelement (14) in ein Fasermaterial der Zwischenschicht und/oder der Gleitschicht (6) eingewickelt ist.

18. Gleitbolzen (2) nach einem der vorstehenden Ansprüche 11 bis 17, wobei eine (radiale) Dicke der Gleitschicht (4) zwischen 0,5mm und 2mm beträgt und/oder eine (radiale) Wandstärke einer Zwischenschicht (12) zwischen 0,1mm und 1mm beträgt.

19. Steckkupplung mit einem ersten Kupplungsteil und einem zweiten Kupplungsteil, die jeweils Ausnehmungen mit Gleitbolzen (2) gemäß Anspruch 1 umfassen, die so zwischen die jeweiligen Ausnehmungen des ersten Kupplungsteils und des zweiten Kupplungsteils eingesetzt werden, dass eine formschlüssige Verbindung zwischen dem ersten Kupplungsteil und dem zweiten Kupplungsteil entsteht.

## Claims

1. A sliding bolt (2), comprising
a core (4), wherein a sliding layer (6), which is designed as a composite sliding layer, is applied to the core on the outside, wherein the sliding layer (6) has polyester fibers or polyester fibers comprising PTFE, which are embedded into a resin (8), wherein the polyester fibers or the polyester fibers comprising PTFE are wound onto the core, and wherein the core is roughened or structured on an outer side.

2. The sliding bolt (2) according to claim 1, wherein a thread structure or a cross-thread structure is applied to the core.

3. The sliding bolt (2) according to claim 1 or 2, wherein the sliding bolt is provided completely with the sliding layer.

4. The sliding bolt (2) according to claim 1, 2, or 3, wherein a solid lubricant (10) is embedded into the used polyester fibers.

5. The sliding bolt (2) according to claim 4, wherein the solid lubricant (10) is a fibrous solid lubricant.

6. The sliding bolt (2) according to one of the preceding claims, wherein impregnated polyester fibers are wound onto the core (4).

7. The sliding bolt (2) according to one of the preceding claims, wherein the core (4) has a surface roughness of 0.01 to 0.5 mm, more preferably of 0.02 to 0.2 mm, and more preferably of 0.05 to 0.1 mm.

8. The sliding bolt (2) according to one of the preceding claims, wherein the core (4) comprises an aluminum, a steel, an iron, a glass fiber composite, a carbon fiber composite, or an aramid fiber composite material or a combination of these materials.

9. The sliding bolt (2) according to one of the preceding claims, wherein the core (4) is applied as solid material.

10. The sliding bolt (2) according to one of the preceding claims, wherein an intermediate layer (12) is arranged between the core (4) and the sliding layer (6).

11. The sliding bolt (2) according to claim 10, wherein the intermediate layer (12) comprises an elastomer and/or a composite and/or fiber composite material.

12. The sliding bolt (2) according to claim 11, wherein the intermediate layer (12) has a fiber composite material, and the sliding layer (6) has polyester fibers or polyester fibers comprising PTFE, which are each embedded into a resin (8), wherein
- fibers of the intermediate layer (12) extend all the way into the sliding layer (6),
- polyester fibers or polyester fibers comprising PTFE extend all the way into the intermediate layer (12) .

13. The sliding bolt (2) according to one of the preceding claims 11 to 12, wherein the intermediate layer is roughened or structured on its outer side, in order to improve a connection of the sliding layer (6) to the intermediate layer.

14. The sliding bolt (2) according to one of the preceding claims 11 to 13, wherein the core (4) is roughened or structured on its outer side, in order to improve a connection of the intermediate layer (12) to the core.

15. The sliding bolt (2) according to one of the preceding claims 12 to 15,
wherein at least one insertion element (14) of an electroconductive material is introduced in the sliding layer (6) and/or in the sliding layer (6) and the intermediate layer, and
wherein the core (4) is preferably made of an electroconductive material, so that an electroconductive connection is formed between at least one area of a sliding layer (6) and the core (2) of the sliding bolt.

16. The sliding bolt (2) according to one of the preceding claims 11 to 15, wherein the insertion element (14) is formed of graphite or comprises a wire of conductive material.

17. The sliding bolt (2) according to claim 15 or 16, wherein the core (4) is wrapped into a fiber material of the intermediate layer, the core or the intermediate layer is wrapped into a fiber material of the sliding layer, and/or the insertion element (14) is wrapped into a fiber material of the intermediate layer and/or of the sliding layer (6).

18. The sliding bolt (2) according to one of the preceding claims 11 to 17, wherein a (radial) thickness of the sliding layer (4) is between 0.5 mm and 2 mm, and/or a (radial) wall thickness of an intermediate layer (12) is between 0.1 mm and 1 mm.

19. A plug-in coupling comprising a first coupling part and a second coupling part, which each comprise recesses comprising sliding bolts (2) according to claim 1, which are inserted between the respective recesses of the first coupling part and of the second coupling part so that a positive connection between the first coupling part and the second coupling part is created.

## Revendications

1. Goupille coulissante (2) comprenant une âme (4), dans laquelle une couche de glissement (6) est appliquée à l'extérieur sur l'âme, qui est formée comme une couche de glissement composite, dans laquelle la couche de glissement (6) comprend des fibres de polyester ou des fibres de polyester avec PTFE, qui sont incorporées dans une résine (8), dans laquelle les fibres de polyester ou les fibres de polyester sont enroulées avec du PTFE sur l'âme, et dans laquelle l'âme est rendue rugueuse ou structurée à l'extérieur.

2. Goupille coulissante (2) selon la revendication 1, dans laquelle une structure filetée ou une structure à filetage croisé est appliquée sur l'âme.

3. Goupille coulissante (2) selon la revendication 1 ou 2, dans laquelle la goupille coulissante est complètement pourvue de la couche coulissante.

4. Goupille coulissante (2) selon la revendication 1, 2 ou 3, dans laquelle un lubrifiant solide (10) est incorporé dans les fibres de polyester utilisées.

5. Goupille coulissante (2) selon la revendication 4, dans laquelle le lubrifiant solide (10) est un lubrifiant solide fibreux.

6. Goupille coulissant (2) selon une quelconque des revendications précédentes, dans laquelle des fibres de polyester imprégnées sont enroulées sur l'âme (4).

7. Goupille coulissante (2) selon une quelconque des revendications précédentes, dans laquelle le noyau (4) a une profondeur de rugosité de 0,01 à 0,5 mm, plus préférablement de 0,02 à 0,2 mm, et plus préférablement de 0,05 à 0,1 mm.

8. Goupille coulissante (2) selon une quelconque des revendications précédentes, dans laquelle l'âme (4) comprend un matériau d'aluminium, acier, fer, composite de fibre de verre, composite de fibre de carbone ou composite de fibre d'aramide ou une combinaison de ces matériaux.

9. Goupille coulissante (2) selon une quelconque des revendications précédentes, dans laquelle le noyau (4) est appliqué sous la forme d'un matériau solide.

10. Goupille coulissante (2) selon une quelconque des revendications précédentes, dans laquelle une couche intermédiaire (12) est disposée entre l'âme (4) et la couche coulissante (6).

11. Goupille coulissante (2) selon la revendication 10, dans laquelle la couche intermédiaire (12) comprend un élastomère et/ou un composite et/ou un matériau composite fibreux.

12. Goupille coulissante (2) selon la revendication 11, dans laquelle la couche intermédiaire (12) comprend un matériau composite fibreux, et la couche coulissante (6) comprend des fibres polyester ou des fibres polyester avec PTFE, qui sont respectivement incorporées dans une résine (8), dans laquelle
- les fibres de la couche intermédiaire (12) s'étendent jusque dans la couche de glissement (6),
- les fibres de polyester ou les fibres de polyester avec PTFE s'étendent jusque dans la couche intermédiaire (12).

13. Goupille coulissante (2) selon une quelconque des revendications précédentes 11 à 12, dans laquelle la couche intermédiaire est rendue rugueuse ou structurée sur son extérieur afin d'améliorer une liaison de la couche de glissement (6) à la couche intermédiaire.

14. Goupille coulissante (2) selon une quelconque des revendications précédentes 11 à 13, dans laquelle le noyau (4) est rendu rugueux ou structuré sur son extérieur afin d'améliorer une liaison de la couche intermédiaire (12) avec l'âme.

15. Goupille coulissante (2) selon une quelconque des revendications précédentes 12 à 15, dans laquelle dans la couche de glissement (6) et/ou dans la couche de glissement (6) et la couche intermédiaire au moins un élément d'insertion (14) constitué d'un matériau électriquement conducteur est introduit, et
dans laquelle l'âme (4) est de préférence constituée d'un matériau électriquement conducteur, de sorte qu'une connexion électriquement conductrice soit formée entre au moins une région d'une couche de glissement (6) et le noyau (2) de la goupille coulissante.

16. Goupille coulissante (2) selon une quelconque des revendications précédentes 11 à 15, dans laquelle l'élément d'insertion (14) est formé de graphite ou comprend un fil en matériau conducteur.

17. Goupille coulissante (2) selon la revendication 15 ou 16, dans laquelle l'âme (4) est enveloppée dans un matériau fibreux de la couche intermédiaire, l'âme ou la couche intermédiaire est enveloppée dans un matériau fibreux de la couche de glissement et/ou l'élément d'insert (14) est enveloppé dans un matériau fibreux de la couche intermédiaire et/ou de la couche de glissement (6).

18. Goupille coulissante (2) selon une des revendications précédentes 11 à 17, dans laquelle une épaisseur (radiale) de la couche de glissement (4) est comprise entre 0,5 mm et 2 mm et/ou une épaisseur de paroi (radiale) d'une couche intermédiaire (12) entre 0,1 mm et 1 mm.

19. Accouplement enfichable comportant une première partie d'accouplement et une deuxième partie d'accouplement, qui comprennent respectivement des évidements avec des goupilles coulissantes (2) selon la revendication 1, qui sont insérés entre les évidements respectifs de la première partie d'accouplement et de la deuxième partie d'accouplement de telle sorte qu'un raccordement par conjonction de forme entre la première partie d'accouplement et la deuxième pièce d'accouplement soit créé.
